# EUROPEAN PATENT APPLICATION

(11) **EP 1 988 681 A1**
(43) Date of publication of application: **05.11.2008**
(21) Application number: 07107244.1
(22) Date of filing: 30.04.2007
(51) Int. Cl.: H04L 29/06, H04M 3/56

(54) **System and method for establishing a conference in a SIP environment comprising an enterprise network and a public network**

(71) Applicant: Research In Motion Limited, Waterloo, Ontario N2L 3W8 (CA)
(72) Inventor: Buckley, Adrian, Tracy, CA 95376 (US); Luu, Lap, Markham, Ontario L6C 2X7 (CA); Allen, Andrew, Mundelein, IL 60060 (US); George, Richard, Waterloo, Ontario, N2T 2S3 (CA); Oliver, Brian, Fergus, Ontario, N1M 1C8 (CA); Lee, Dalsu, Thornhill, Ontario, L4J 7Y8 (CA)
(74) Representative: Roberts, Gwilym Vaughan

(57) **Abstract**

The application relates to the establishment of a video conference in a SIP environment comprising an SIP-based enterprise network and a public network. In one embodiment, a network node (504) is operable, responsive to receiving (602) a SIP-based request from a calling party (502), to establish said conference. Said network node (504), also referred to as Unified Communications Platform, sets up an inbound media session leg with the calling party (502) and one or more outbound media session legs with a corresponding number of target parties (510-1 to 510-N). Said network node (504) includes functionality for patching (608) the inbound and outbound media session legs to establish an end-to-end communications path respectively between the calling party (502) and one or more target parties (510-1 to 510-N). Said SIP-based request is embedded in a SIP REFER message and includes the enterprise address of the calling party.

## Description

### CROSS-REFERECE TO RELATED APPLICATION(S)

This application discloses subject matter that is related to the subject matter of the following U.S. patent application(s): (i) "SYSTEM AND METHOD FOR INTEGRATING AN OUTGOING CELLULAR CALL AS AN ENTERPRISE CALL" (Docket No. 30761-US-PAT), Application No.: , filed even date herewith, in the name(s) of Andrew Allen, Adrian Buckley, Richard George, Brian Oliver, Lap Luu and Dalsu Lee; and (ii) "SYSTEM AND METHOD FOR INTEGRATING AN OUTGOING CELLULAR CALL AS AN ENTERPRISE CALL IN AN IMS ENVIRONMENT" (Docket No. 30761-1-US-PAT), Application No.: , filed even date herewith, in the name(s) of Andrew Allen, Adrian Buckley, Richard George, Brian Oliver, Lap Luu and Dalsu Lee, which is (are) hereby incorporated by reference.

### FIELD OF THE DISCLOSURE

The present patent disclosure generally relates to communications networks. More particularly, and not by way of any limitation, the present patent disclosure is directed to a system and method for presenting media (e.g., video) to multiple parties in a Session Initiation Protocol (SIP)-based network environment.

### BACKGROUND

Many enterprise networks are replacing their existing Private Branch Exchange (PBX)- and Central Office Exchange (CENTREX)-based telephony systems with systems based upon Voice-over-IP (VoIP) and Session Initiation Protocol (SIP)-based signaling systems that utilize the existing enterprise IP infrastructure, e.g., Local Area Network (LAN) and Wireless LAN (WLAN) technologies. It is not uncommon for enterprise employees to regularly use mobile communications devices when away from the enterprise, which interoperate with cellular networks such as, e.g., the Global System for Mobile Communications (GSM) networks, Code Division Multiple Access (CDMA) networks, and Universal Mobile Telecommunications System (UMTS) networks, to keep in touch with other employees of the enterprise and to conduct business communications with other people outside the enterprise. Additionally, mobile communications devices are being enhanced to provide SIP-based communications (including VoIP) over WLAN access as well as cellular networks, thereby allowing these devices to provide mobile telephony communications capability when within the enterprise as well as when away from the enterprise. It is expected that such developments may allow replacement of the ubiquitous wired desktop phone in the enterprise with dual-mode, WLAN-capable mobile devices.

Although cellular telephony networks have deployed IP-based data communications capabilities through exploitation of well-known technologies, it is generally understood that these networks cannot currently commercially support carrier-class VoIP telephony services due to issues of delay, Quality of Service (QoS) and efficiency, which prevent cost-effective usage of such networks for purposes of providing acceptable quality voice services. Accordingly, for the foreseeable future, telephony services based upon the existing network infrastructure are likely to continue to utilize conventional circuit-switched network technology for telephony calls.

Based on the foregoing, it should appreciated that the integration of VoIP enterprise networks with carrier cellular telephony networks in order to serve an enterprise user within the enterprise as well as while away is fraught with numerous difficulties. Moreover, in such scenarios it may be desirable for enterprises to have certain control over the calls made by their employees for tracking and monitoring purposes. Furthermore, where video or multimedia data is involved, it would be advantageous to provide for delivery of enterprise-controlled video/multimedia services in a SIP network environment.

### SUMMARY

The present patent disclosure is broadly directed to a scheme for presenting media in a SIP-based network environment, preferably using a back-to-back ("B2B") integration of media legs facilitated by a SIP B2B User Agent. In one aspect, disclosed herein is an embodiment of a method for presenting media in a SIP-based network environment. The claimed embodiment comprises one or more of the following: receiving a request from a calling party for initiating a SIP media application; establishing an inbound media stream leg to the calling party; establishing one or more outbound media stream legs to a corresponding number of target parties based on the SIP media application; and patching the inbound and outbound media stream legs to establish an end-to-end communications path respectively between the calling party and one or more target parties.

In another aspect, disclosed herein is an embodiment of a network node for presenting media in a SIP-based network environment. The claimed embodiment comprises one or more of the following: means for receiving a request from a calling party for initiating a SIP media application; means for establishing an inbound media stream leg to the calling party; means for establishing one or more outbound media stream legs to a corresponding number of target parties based on the SIP media application; and means for patching the inbound and outbound media stream legs to establish an end-to-end communications path respectively between the calling party and one or more target parties.

In a still further aspect, disclosed herein is an embodiment of a computer program product executable on a processing entity, the computer program product including instructions for facilitating media services in a SIP-based network environment. The claimed embodiment comprises one or more of the following: program code for processing a request received from a calling party with respect to initiating a SIP media application; program code for effectuating an inbound media stream leg to the calling party; program code for effectuating one or more outbound media stream legs to a corresponding number of target parties based on the SIP media application; and program code for effectuating patching between the inbound and outbound media stream legs in order to establish an end-to-end communications path respectively between the calling party and one or more target parties.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts an exemplary network environment wherein one or more embodiments of the present patent disclosure may be practiced for purposes of integrating an outgoing cellular call as an enterprise call;

FIG. 2 depicts a flowchart of the present patent disclosure according to one embodiment;

FIG. 3 depicts another flowchart of the present patent disclosure according to one embodiment;

FIG. 4 depicts an exemplary message flow diagram according to one embodiment of the present patent disclosure;

FIG. 5 depicts an exemplary network environment wherein a SIP-based video/media service may be provided in accordance with an embodiment of the present patent disclosure; and

FIG. 6 depicts a flowchart associated with one embodiment of the present patent disclosure.

### DETAILED DESCRIPTION OF THE DRAWINGS

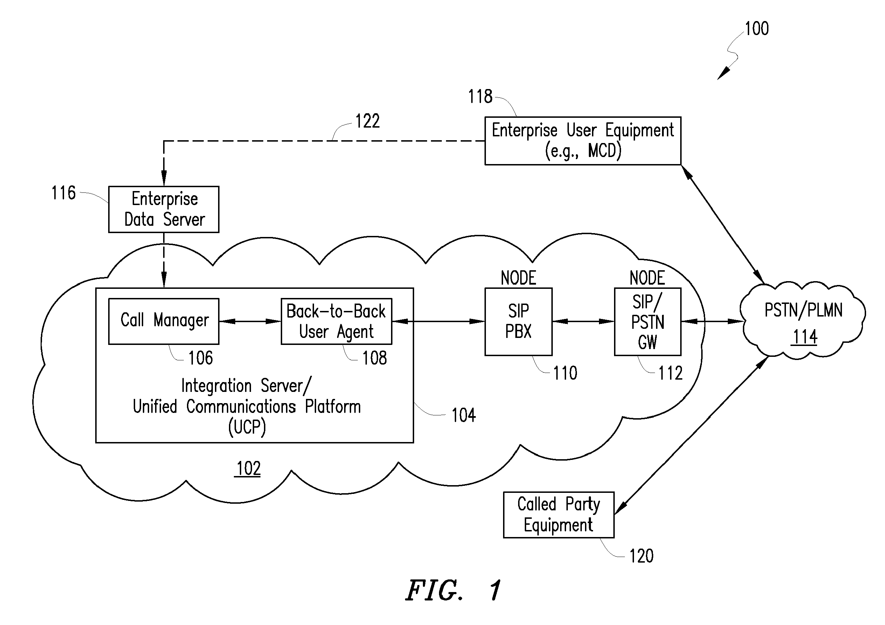

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, an exemplary network environment 100 is depicted wherein an embodiment of the present patent disclosure may be practiced for integrating an outgoing cellular call as an enterprise call. As depicted, the network environment 100 includes a generalized network infrastructure 102 wherein certain portions may form an enterprise network whereas the remaining portions may comprise an external network arrangement such as one or several service provider networks that serve as intermediary networks with respect to the enterprise network and the well-known PSTN/PLMN infrastructure 114. For purposes herein, an enterprise network may be any communications network internal to a company, office, or organization, and may comprise wireline and/or wireless network infrastructure. Regardless of the actual implementation, the network infrastructure 102 includes an integration server (also referred to as a Unified Communications Platform (UCP) element) 104, a switching element such as a SIP-capable Private Branch Exchange (PBX) 110 and a gateway (GW) element such as a SIP/PSTN GW 112. As alluded to previously, one or more of these elements may be incorporated within an enterprise network infrastructure in one embodiment. Alternatively, one or more of these elements or their functionalities may be hosted in a service provider network. In either arrangement, the functionalities of the elements may be integrated or redistributed into separate network entities. Accordingly, for purposes of the present patent disclosure, a "network node" may comprise a generalized network entity that effectuates or facilitates at least a portion of the functionalities set forth hereinbelow with respect to call integration.

An enterprise user is operable to effectuate communications (e.g., Voice/data/Video calls or multimedia sessions, and the like) in a number of scenarios within the context of the network environment 100 with respect to a called party 120. In general, the enterprise user is capable of initiating communications using one of two addresses: an enterprise address that may be used for calls made from within the enterprise network and a non-enterprise address for calls made from outside the enterprise network. In one application, the enterprise user may be provided with two separate pieces of user equipment (UE) 118: a wireline telephony equipment having the enterprise address that is used when the enterprise user is on the enterprise premises and a mobile communications device (MCD) having a cellular telephony number (i.e., non-enterprise address) that may be used when the enterprise user is away. Alternatively, where local wireless connectivity to the enterprise network is supported, a single wireless UE device operable in two different radio access technologies (RATs) may be provided. In this scenario, when the wireless UE device is attached to the enterprise network via any known or heretofore unknown Wireless Local Area Network (WLAN) technology, calls originated by the enterprise user may have the enterprise address as the calling party number. On the other hand, calls originated when the wireless UE device is attached to a wide area cellular network (WACN) such as the Public Land Mobile Network (PLMN) 114 may have the non-enterprise address (e.g., cellular telephony number) as the calling party number. Accordingly, it should be appreciated that the enterprise user equipment 118 may be a conventional cellular phone having data channel capability (e.g., Short Message Service or SMS capability) or a dual-mode MCD having WLAN capability (for enterprise operation) and WACN capability (for remote operation). Additionally, for purposes of further generalization, the enterprise UE device 118 may also comprise any personal computer (e.g., desktops, laptops, palmtops, personal digital assistants (PDAs) or other handheld computing devices) equipped with a suitable wireless modem, as well as a communications device operable in both circuit-switched (CS) and packet-switched (PS) communications that may even be capable of effectuating an inter-technology handoff between both CS and PS domains.

Based on the foregoing, it may be realized that the enterprise and non-enterprise addresses for an enterprise user may take on different forms, depending on the equipment and service provisioning. For instance, the enterprise address may comprise a SIP Uniform Resource Identifier (URI) or an E-164 number. Likewise, the non-enterprise address and the called party address may also comprise either SIP URIs, E.164 numbers, or other identifiers.

An enterprise data server 116 may be disposed in association with at least a portion of the network 102, preferably with the UCP node 104 when provisioned as part of an enterprise network. A data communications path 122 may be effectuated between the enterprise UE 118 and the enterprise network over the PLMN data network infrastructure via the enterprise data server 116. Regardless of whether integrated within an enterprise network or disposed in a service provider network, UCP node 104 preferably includes a Call Manager functionality 106 as well as a SIP Back-to-Back User Agent (B2BUA) 108 that is operable to perform third-party call control in order to combine multiple call legs together. In general, all enterprise SIP calls may be routed via the UCP node 104 and it is the role of the UCP node 104 to trigger the routing of the incoming SIP calls to the enterprise user regardless of whether UE 118 is attached via the enterprise WLAN or via the PLMN cellular network. Further, as will be described in detail below, the enterprise data server 116 can also receive a trigger message (i.e., a request to originate an outgoing cellular call) from UE 118 that is attached to the PLMN cellular network 114 via the cellular network's data network (such as GPRS or CDMA packet data network, for example) to request that the UCP node 104 establish a call between the enterprise UE 118 and the equipment 120 of the called party.

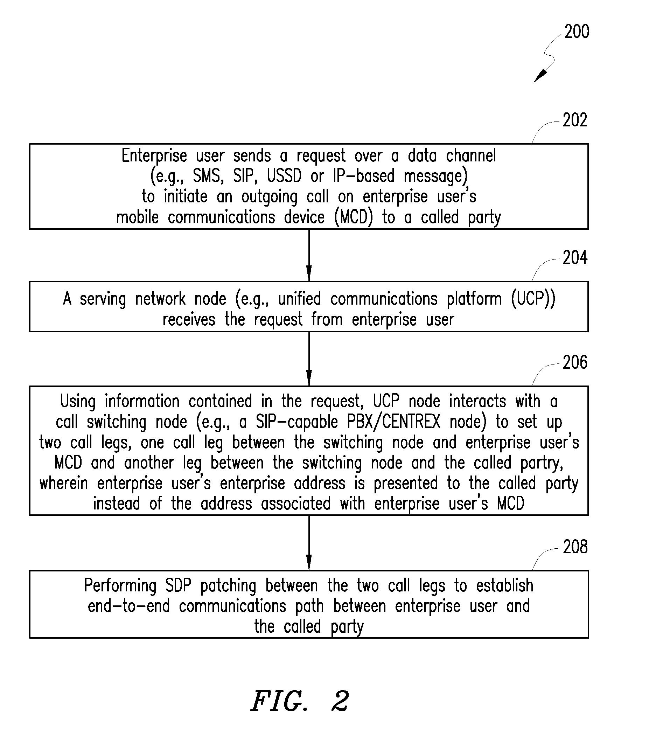

Taking reference to FIGS. 1 and 2 together, a generalized scheme 200 for integrating outgoing calls from the enterprise UE 118 when it is attached to the cellular network may be set forth as follows. The enterprise user using its equipment sends a request message to a serving network node (i.e., the UCP element 104 shown in FIG. 1) via the cellular network's data network (block 202). Additionally or alternatively, the request message may also be mediated via an enterprise data server. In one embodiment, the request may comprise a SIP Request such as a SIP REFER message or some other SIP Request (e.g., a SIP INVITE message) either sent directly to the enterprise data server 116 via the cellular network's data network or routed to the UCP node 104 via the cellular network's SIP based infrastructure such as the IP Multimedia Subsystem (IMS). Alternatively, the message may not be a SIP Message at all and could be any message that contains the necessary information to enable the UCP node 104 to establish a call between the enterprise UE 118 and the called party's equipment 120 that the enterprise user is attempting to call (e.g., an SMS message, an Unstructured Supplementary Service Data (USSD) message, or an IP based message). In accordance with an embodiment, the following pieces of information may be transmitted as part of the request message: (i) the enterprise address (e.g., SIP URI or E.164 number) that the enterprise user is reachable at; (ii) the non-enterprise address (e.g., E.164 number) that the enterprise UE is reachable at when it is attached to the cellular network; (iii) the E.164 number or SIP URI of the called party; and (iv) an indication of whether privacy is required. Upon receiving the request message from the enterprise UE (block 204), the service logic at the UCP node 104 uses the received information to effectuate two call legs in association with a switching node such as a SIP-capable PBX/CENTREX node, a first call leg between the switching node and the enterprise UE and a second call leg between the called party's UE and the switching node wherein the enterprise user's enterprise address is presented to the called party instead of the non-enterprise address associated with the UE (i.e., the cellular number) (block 206). Thereafter, the first and second call legs are patched together wherein the two respective Session Description Protocol (SDP) streams associated with the call legs are joined in order to establish an end-to-end bearer communications path between the enterprise user and the called party (block 208).

Set forth below is an example of how a SIP REFER request can be used to trigger the UCP node 104 to establish an outgoing call within the context of the scheme described above:

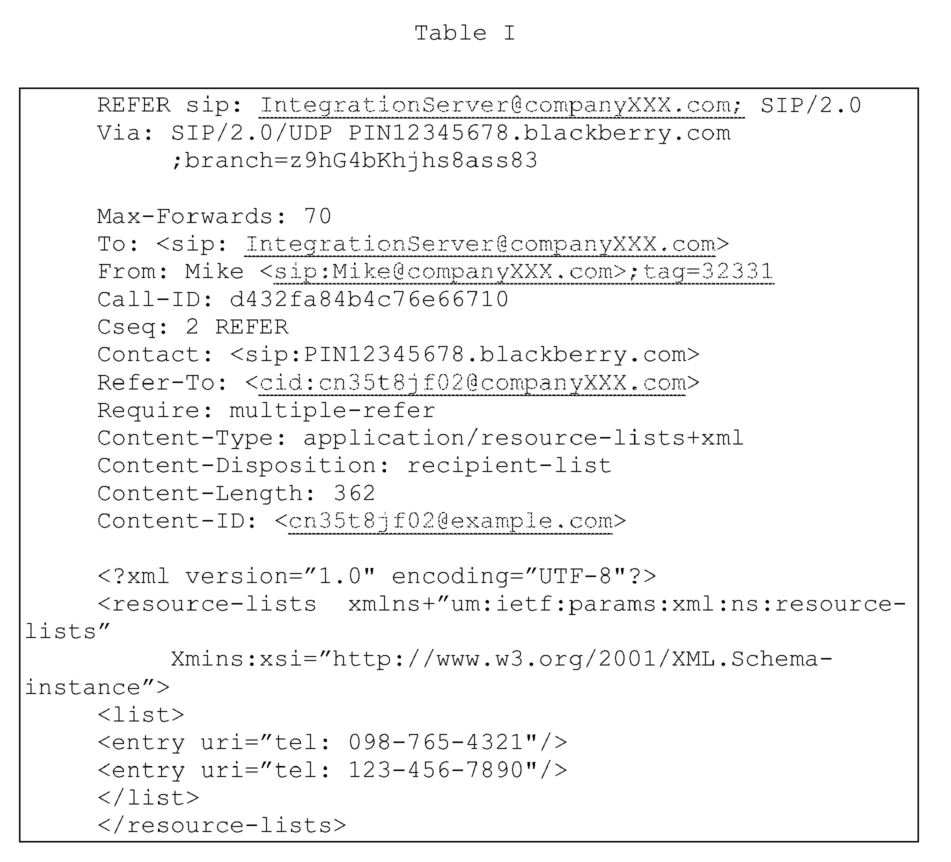

Those skilled in the art will recognize that the above SIP REFER request embodiment uses the Resource List mechanism defined in draft-ietf-sip-multiple-refer and draft-ietf-simple-xcap-list-user to trigger the sending of a SIP INVITE request towards both the enterprise UE 118 and the called party equipment 120 using the list entry uri elements to deliver both the E.164 number that the enterprise UE is reachable at via the cellular network and the E.164 number of the party being called. Accordingly, when the UCP node 104 receives the SIP REFER request or other trigger message, it uses SIP Third Party Call Control to establish two SIP Call legs; one SIP leg to the enterprise UE via the PBX, SIP-PSTN Gateway and the circuit-switched cellular network; the other SIP leg to the called party. As pointed out previously, these two call legs are joined together at the UCP node 104 in order to form a single end-to-end call between the enterprise user and the called party. The SIP INVITE requests sent contain the enterprise address of the enterprise UE terminal which can be in the form of SIP URI or as an E.164 number in a TEL URI along with the appropriate privacy setting if requested in the SIP REFER request. Alternatively, the privacy setting may be required by the enterprise network based on certain service provisioning policies and profiles. The enterprise address of the enterprise UE terminal can be transported in the SIP INVITE request using the SIP From header, Referred-By header, P-Asserted-Identity header, Identity header or Remote-Party-ID header. If a SIP URI is used as the enterprise address of the enterprise UE terminal, the SIP-PBX 110 may translate this address to the corresponding E.164 number that represents the enterprise address of the device. The SIP-PSTN GW 112 includes the E.164 number that represents the enterprise address of the enterprise UE terminal in the Calling Line Identity in the circuit- switched signaling messages.

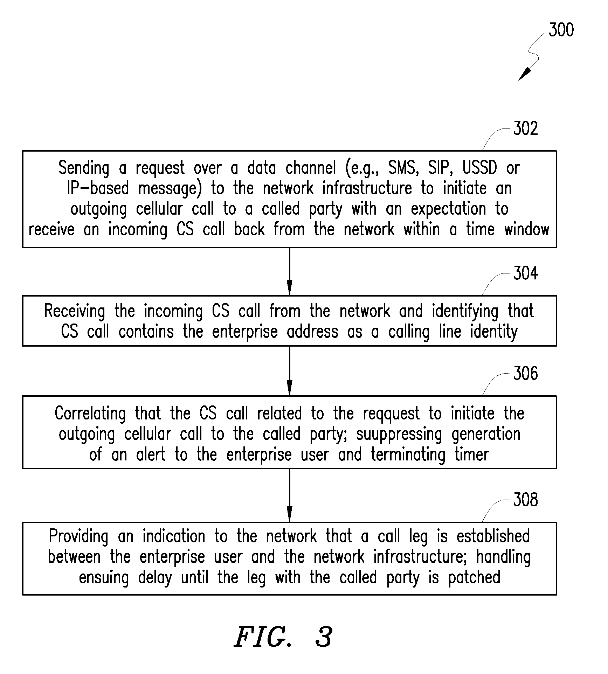

With respect to the behavior of the enterprise UE for purposes of facilitating integration of an outgoing cellular call, reference may now be taken to FIG. 3 wherein a flowchart is depicted. When a request message for initiating an outgoing cellular call to a called party is transmitted to the network infrastructure, there is an expectation to receive an incoming circuit-switched call back from the network within a time window (block 302). Accordingly, a timer mechanism may be started at the application level to determine when to receive the circuit-switched call back in response to the outgoing request message. In one embodiment, if the timer expires, the enterprise UE device may try a number of times until a limit is reached, whereupon the call is considered to have failed. When the enterprise UE device receives a call establishment SETUP signaling request via the circuit-switched PSTN/PMLN signaling, the logic executing on the device is operable to identify that the circuit-switched call contains the enterprise address as the Calling Line Identity (block 304) (that is, the Calling Line Identity in the SETUP is the enterprise UE's enterprise address), and based thereon, the logic determines that this incoming call is related to the requested outgoing call (requested via the SIP REFER request or other message) (block 306). Accordingly, the logic operates to suppress generation of an alert to the enterprise user but establishes the circuit-switched call and stops the application timer (block 306). Further, the enterprise UE may provide an indication to the network that the call leg has been established (block 308). Accordingly, in one embodiment, the UCP node may wait until it receives such an acknowledgement of the establishment of the call leg with the enterprise UE device before attempting to establish the call leg to the called user by sending an SIP INVITE request in order to avoid the possibility of the called party answering before the call leg with the enterprise UE device is established (i.e., avoidance of a race condition). In the meantime, until the call legs are patched, there may be a delay experienced at the enterprise UE from the time the circuit-switched call leg with the network is established. Appropriate delay handling mechanisms(s) may therefore be provided to mitigate the delay.

When the called party's equipment receives the circuit-switched SETUP message (or SIP INVITE request if the called party is using a SIP phone within the enterprise SIP network or an external SIP network), the Calling Line Identity in the case of the circuit-switched SETUP message (or From header, Referred-By header, P-Asserted-Identity header, Identity header or Remote-Party-ID header in the case of SIP INVITE message) contains the enterprise address (e.g., E.164 number or SIP URI) of the enterprise UE device to be presented to the called party for Calling Line Identity Presentation (if provided based on the privacy setting). The called phone rings the user and returns an ALERTING message in the case of a circuit-switched call (or a SIP 180 "Ringing" response in the case of a SIP call). An ALERTING message will be translated by the SIP-PSTN gateway to a SIP 180 "Ringing" response. When the SIP 180 "Ringing" response is received at the UCP node, the service logic operable thereat may send a notification of "Ringing" back to the enterprise UE terminal via the cellular network's data network. In the case that the call establishment was triggered using a SIP REFER request, this notification may be in the form of a SIP NOTIFY request as specified in RFC 3515. In the case a message other than a SIP REFER request was used, the notification of "Ringing" may be sent using some other message. It is necessary to use the connection via the cellular network's data network to notify the "Ringing" since the call leg that is established with the enterprise UE terminal via the circuit-staitched network is "in the wrong direction" to be able to indicate ALERTING using the circuit-switched signaling protocol.

Upon answering by the enterprise user, the UE terminal sends the circuit-switched CONNECT message (or SIP 200 "OK" response if the called party is using a SIP phone within the enterprise SIP network or an external SIP network). A CONNECT message will be translated by the SIP-PSTN GW to a SIP 200 "OK" response. When the SIP 200 "OK" response is received at the UCP node 104, it can send a notification of "OK" back to the enterprise UE terminal via the cellular network's data network. In the case that the call establishment was triggered using a SIP REFER request, this notification will be in the form of a SIP NOTIFY request as specified in RFC 3515. In the case a message other than a SIP REFER request was used, the notification of "OK" may be sent using some other message. At this point the call is established via the cellular network between the enterprise UE terminal and the called party, with the enterprise address of the enterprise UE terminal being displayed as the identity of the calling party.

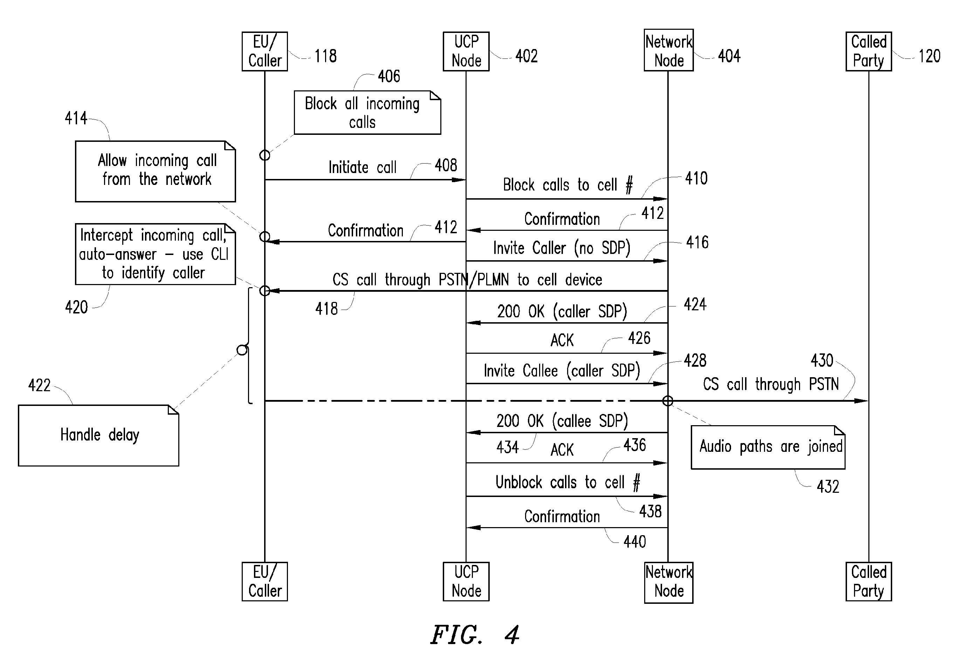

FIG. 4 depicts an exemplary message flow diagram according to an embodiment of the process set forth above. As illustrated, a UCP node 402 and a network node 404 are exemplified to highlight the message flow between the enterprise UE 118 and the network infrastructure in particular detail. Upon blocking all incoming calls to the enterprise UE 108 (block 406), a request with respect to an outgoing call is initiated (reference numeral 408). In response, the UCP node 402 sends a message to the network node 404 (e.g., SIP-PBX) to block calls to the enterprise UE 118. A confirmation 412 is then propagated from the network node 404 to enterprise UE 118 via the UCP node 412, whereupon incoming calls from the network may be allowed (block 414). The UCP node 402 transmits a message 416 to the network node 404 to invite the enterprise user (i.e., caller) with respect to establishing a CS call 418 through the cellular network to the enterprise UE 118. Service logic at the enterprise UE 118 is operable to intercept the incoming CS call setup and identify that the enterprise address of the enterprise user is the CLI (block 420). Thereafter, a SIP 200 "OK" message 424 is generated by the network node 404 towards the UCP node 402 with respect to caller SDP. In response, an acknowledgement (ACK) 426 is generated by the UCP node 402. The UCP node 402 also generates a message 428 towards the network node 404 to invite the called party (i.e., callee) with respect to establishing a CS call 430 therewith through the PSTN/PLMN. As shown in block 422, appropriate service logic may be provided for handling the delay before patching the call legs. Pursuant to joining the audio paths (block 432), a SIP 200 "OK" message 434 is generated by the network node 404 towards the UCP node 402 with respect to callee SDP. In response, an acknowledgement (ACK) 436 is generated by the UCP node 402. A message 438 is provided thereafter by the UCP node 402 to the network node 404 in order to unblock calls to the enterprise UE 118, resulting in a confirmation 440 by the network node 404.

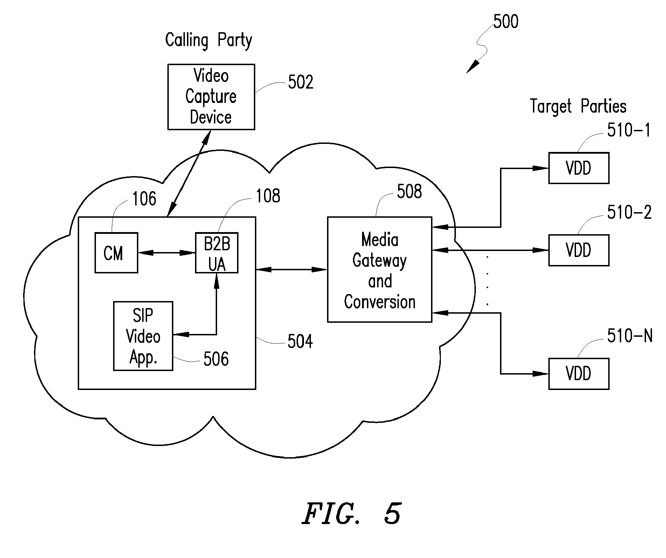

An embodiment of the foregoing SIP Back-to-Back integration mechanism may be implemented for purposes of delivery of a video stream (or, multimedia in general) to one or more target parties disposed in a network environment. Referring to FIG. 5, depicted therein is an exemplary network environment 500 wherein a SIP-based media/video service (e.g., video conferencing) may be provided in accordance with an embodiment of the present patent disclosure. As with the network environment 100 described previously, the network environment 500 may comprise an enterprise network, a service provider network, or any public data or telephony communications network, or any portions or combinations thereof. A network node 504 having the UCP functionality is provided with call manager 106 and SIP Back-to-Back User Agent 108, both which have been described in the foregoing sections. Additionally, a SIP-based media/video service application 506 (e.g., a recording/presentation application) is provided in association with the UCP functionality of the network node 504, whereby video/multimedia sessions may be anchored thereat by setting up one media call/session leg with an originating party and one or more media legs with a number of target parties. By way of illustration, the originating party may be designated as the calling party having suitable video capture equipment 502) (e.g., video cameras etc.) that is adapted to provide a trigger request to the network node 504, regardless of whether the calling party is locally attached or remotely attached in the case of an enterprise environment. A media exchange and gateway node 508 is disposed between the network node 504 and a plurality of customers (i.e., target parties), each having suitable video display device (VDD) equipment 510-1 through 510-N. In one embodiment, one or more of the media session legs to the customers may involve conversion from SIP-controlled IP media streams to other forms of delivery, e.g., cable.

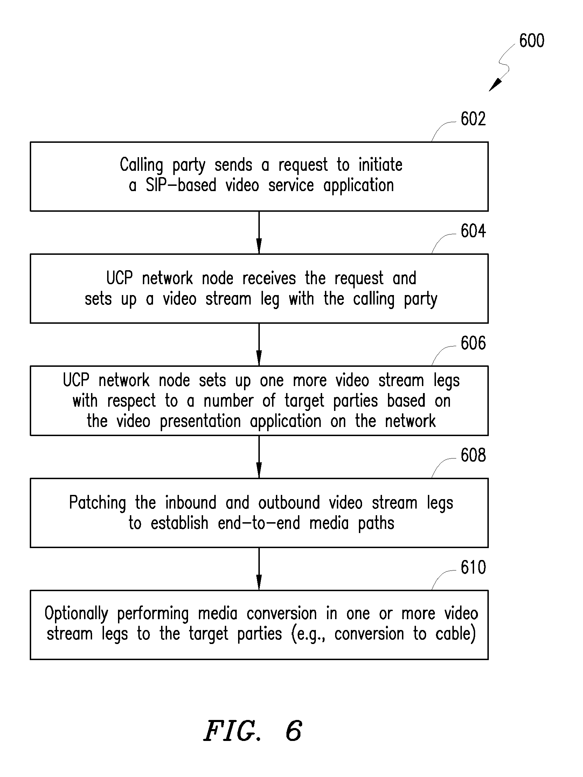

FIG. 6 depicts a flowchart of a scheme 600 associated with one embodiment of the present patent disclosure in reference to the network environment 500 described above. As shown in block 602, a calling party sends a request (i.e., a trigger message) to a serving network node, e.g., UCP network node 504, to initiate a SIP-based video service application (e.g., a delivery application). As described in detail previously, such a request may be a SIP REFER request that includes appropriate calling party information, target party information, service parameters, and the like. Based on the received information, the SIP-based video application on the UCP network node establishes a video stream leg with the calling party, which may be referred to as the inbound media session/call leg (block 604). Likewise, the UCP network node also establishes one or more video stream legs (i.e., outbound media session/call legs) with respect to a corresponding number of target parties based on the service parameters associated with the video presentation application (block 606), mediated via suitable intermediary nodes such as one or several media exchanges and gateways. As described previously, the inbound and outbound session legs may be established by sending appropriate control messages in both directions, e.g., SETUP messages and/or SIP-based messages. The inbound and outbound video stream legs are then patched at the anchoring point to establish one or more end-to-end video/media paths (block 608). As alluded to hereinabove, where it is necessary to convert from SIP-controlled IP media to other forms of delivery, appropriate conversion may also be optionally implemented on a stream-by-stream basis (block 610). Those skilled in the art will recognize that suitable timing mechanisms and delay handling mechanisms may also be implemented, *mutatis mutandis,* at the device side and/or the network side in order to avoid the race conditions and other operational issues set forth in detail with reference to the previously described embodiments. Furthermore, it should be appreciated that the various operations set forth herein may be accomplished via a number of means, including software (e.g., program code), firmware, hardware, or in any combination, usually in association with a processing system. Where the processes are embodied in software, such software may comprise program instructions that form a computer program product, uploadable service application software, or software downloadable from a remote station, and the like.

In addition, it should be recognized that the terms "inbound" and "outbound" as used herein do not necessarily imply any directionality. Rather, these terms are used only to distinguish between the originating party-side media session leg on the one hand and the called party-side media session legs on the other. Further, in another embodiment, the media stream may be routed through some enterprise-based server that performs additional processing (e.g., recorder) before being sent to the VDDs. In a still further embodiment, the media streams may be bidirectional; that is, one or more media streams may be generated from the called parties as well.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present disclosure as set forth in the following claims.

## Claims

1. A method for presenting media in a Session Initiation Protocol (SIP)-based network environment (500), comprising:
receiving (602) a request from a calling party (502) for initiating a SIP media application (506);
establishing (606) an inbound media stream leg to said calling party (502);
establishing (606) one or more outbound media stream legs to a corresponding number of target parties (510-1 to 510-N) based on said SIP media application (506); and
patching (608) said inbound and outbound media stream legs to establish an end-to-end communications path respectively between said calling party (502) and one or more target parties (510-1 to 510-N).

2. The method as recited in claim 1, wherein said request comprises a SIP REFER message.

3. The method as recited in claim 1 or claim 2, wherein said request includes an enterprise address of said calling party.

4. The method as recited in claim 3, wherein said enterprise address comprises one of a SIP Uniform Resource Identifier (URI) and an E-164 number.

5. The method as recited in claim 1, claim 2, claim 3 or claim 4, wherein said outbound media stream legs comprise at least one SIP-controlled Internet Protocol (IP) media stream.

6. The method as recited in claim 5, further comprising converting (610) said SIP-controlled IP media stream to another media delivery form.

7. A network node (504) for presenting media in a Session Initiation Protocol (SIP)-based network environment (500), comprising:
means for receiving (602) a request from a calling party for initiating a SIP media application (506);
means for establishing (606) an inbound media stream leg to said calling party (502);
means for establishing (606) one or more outbound media stream legs to a corresponding number of target parties (510-1 to 510-N) based on said SIP media application (506); and
means for patching (608) said inbound and outbound media stream legs to establish an end-to-end communications path respectively between said calling party (502) and one or more target parties (510-1 to 510-N).

8. The network node (504) as recited in claim 7, wherein said request comprises a SIP REFER message.

9. The network node (504) as recited in claim 7 or claim 8, wherein said request includes an enterprise address of said calling party (502).

10. The network node (504) as recited in claim 9, wherein said enterprise address comprises one of a SIP Uniform Resource Identifier (URI) and an E-164 number.

11. The network node (504) as recited in claim 7, claim 8, claim 9 or claim 10, wherein said outbound media stream legs comprise at least one SIP-controlled Internet Protocol (IP) media stream.

12. The network node (504) as recited in claim 7, claim 8, claim 9, claim 10 or claim 11, wherein said SIP media application (506) comprises a video conferencing service.
